# EUROPÄISCHE PATENTSCHRIFT

(11) **EP 0 607 403 B1**
(45) Veröffentlichungstag und Bekanntmachung des Hinweises auf die Patenterteilung: **11.12.1996**
(21) Anmeldenummer: 93917757.2
(22) Anmeldetag: 05.08.1993
(51) Int. Cl.: B01D 35/30, B01D 46/00

(54) **FILTERAPPARAT**
FILTERING APPARATUS
APPAREIL DE FILTRATION

(30) Priorität: 06.08.1992 DE 9210545 U
(43) Veröffentlichungstag der Anmeldung: 27.07.1994
(73) Patentinhaber: Straub, Hartwig, D-74744 Ahorn (DE)
(72) Erfinder: Straub, Hartwig, D-74744 Ahorn (DE)
(74) Vertreter: Bardehle, Heinz, Dipl.-Ing.
(86) Internationale Anmeldenummer: EP9302091
(87) Internationale Veröffentlichungsnummer: WO9403258

(56) Entgegenhaltungen:
- EP-A- 0 130 271
- EP-A- 0 236 817
- DE-A- 3 527 766
- DE-C- 3 703 451

## Beschreibung

Die Erfindung betrifft einen druckfesten und -dichten Filterapparat mit einem Gehäuse, das ein für Wartungs- und Reparaturzwecke technologisch einfaches Öffnen ermöglicht.

Bei der Filterung staubförmiger Partikel aus gasförmigen Medien werden häufig aus mehreren stabförmigen Filterelementen bestehende zylinderförmige Filtereinsätze in einer Bauart, wie sie allgemein bekannt sind, eingesetzt. Diese Filtereinsätze müssen für Wartungs- und Reparaturzwecke zugänglich sein.

Diese Zugänglichkeit wurde bisher konstruktiv relativ aufwendig dadurch erreicht, daß in den inneren Zylinder eine Öffnung geschnitten war, die mit einem Deckel versehen war. Dieser am äußeren Rand verschraubbare und abnehmbare Deckel ist technologisch und materialmäßig aufwendig und erfordert des weiteren zum Öffnen und Schließen Werkzeuge, für deren Betätigung Platz oft nicht ausreichend vorhanden ist (Siehe z.B. EP-A-0 130 271). Bekannt ist außerdem, daß die Zugänglichkeit durch in Scharnieren schwenkbare, ebene Türen erreichbar ist.

Der Erfindung liegt die Aufgabe zu Grunde, einen Filterapparat der als bekannt vorausgesetzten Art so auszubilden, daß ein rasches Öffnen des Filterapparates bei technologisch geringem Aufwand und geringem Materialaufwand ermöglicht wird.

Diese Aufgabe wird erfindungsgemäß durch die im Anspruch 1 angegebenen Merkmale gelöst.

Danach wird eine Aufteilung der bisher einteilig ausgeführten mit einer Öffnung und einem Deckel versehenen Zylinderwand des Filterapparates zweiteilig ausgeführt. Die Zylinderwand besteht dabei aus zwei rohrförmigen Zylindern 2, 3 mit jeweils mindestens einer etwa gleichgroßen Öffnung 4a, 4b, wobei beide Zylinder sich derart berühren, daß der äußere der beiden Zylinder 3 mit seiner inneren Oberfläche an der äußeren Ob erfläche des inneren Zylinders 2 anliegt, und der innere Zylinder 2 den Filtereinsatz 1 umschließt Jeder der beiden gegeneinander um eine gemeinsame Drehachse 7 verdrehbaren Zylinder hat eine etwa gleichgroße und gleichgestaltete Öffnung in der Zylinderwand, die bei entsprechender Drehung deckungsgleich übereinandergebracht werden, um so eine Zugänglichkeit des Filterinnern zu erreichen Zum für den normalen Filterbetrieb notwendigen Erschließen der in den Zylinderwandungen befindlichen Öffnungen wird der äußere Zylinder 2 so weit gegen den inneren Zylinder 3 verdreht, daß der äußere Zylinder die Öffnung des inneren Zylinders vollständig überdeckt.

Eine besonders bevorzugte Ausführungsform des äußeren Zylinders 3 ist Gegenstand des Anspruches 11. Danach hat der äußere Zylinder etwa 180° gegenüber der Öffnung 4b einen Schlitz, der parallel zur Drehachse 7 der beiden Zylinder senkrecht zu den Zylinderstirnseiten von oben nach unten in Mantellinienrichtung verläuft Dieser Schlitz 9 ist konisch ausgeführt, und beide Ränder haben entlang der gesamten Länge des Schlitzes einen nach außen umgebogenen Falz 8. Eine als Gegenstück zu den Falzen 8 ausgebildete Spannleiste 5 mit gleicher Konizität wie der Schlitz, deren Höhe der des äußeren Zylinders 3 entspricht, hat an ihren Seitenlängsrändern nach innen umgebogene Falze 8. Durch Aufeinanderstecken von der Spannleiste 5 und dem äußeren Zylinder 3 wird ein Verspannen des äußeren Zylinders um den inneren Zylinder erreicht. Diese Spannvorrichtung wird betätigt, wenn der äußere Zylinder 3 die Öffnung des inneren Zylinders 4a mit seiner Wandung vollkommen überdeckt, um ein druckdichtes Abschließen des Filtergehäuses des Filterapparates zu erreichen. Durch Öffnen der Spannvorrichtung kann der äußere Zylinder erneut derart gegen den inneren Zylinder verdreht werden, daß beide Öffnungen 4a und 4b deckungsgleich übereinandergebracht werden können, um so eine Zugänglichkeit für Wartungs- und Reparaturzwecke erreichen zu können. Bei Verspannen des äußeren Zylinders 3 gegen den inneren Zylinder 2 wird eine Verbundlösung beider Gehäusezylinder erreicht. Bei genügend hoher Elastizität des Bandmaterials des äußeren Zylinders 3 kann eine Montage auch seitwärts um den inneren Zylinder 2 realisiert werden. Um im verspannten Zustand eine Druckdichtheit zu erreichen und um zu vermeiden, daß Filtrat zwischen inneren 2 und äußeren Zylinder 3 gelangt, ist eine streifenförmige Dichtung 6 an der Außenseite des Innenzylinders 2 des Gehäuses um die gesamte Öffnung 4a auf der Zylindermantelfläche angebracht.

Zweckmäßige Weiterbildungen der erfindungsgemäßen Vorrichtung ergeben sich aus den Ansprüchen 1 bis 12. Im folgenden wird die Erfindung an Hand in den Zeichnungen dargestellter bevorzugter Auführungsbespiele näher erläutert.

Es zeigt:

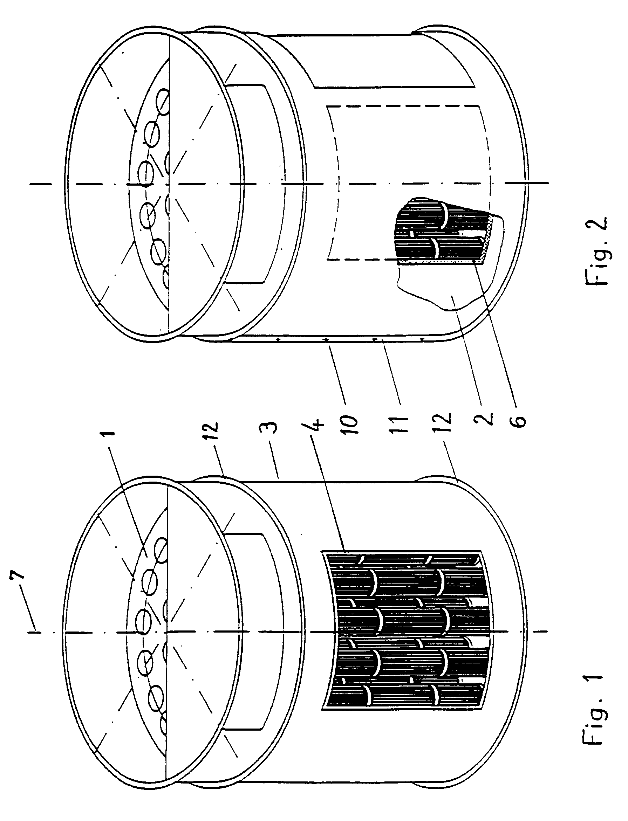

- Fig. 1: den Filterapparat als Zusammenbauzeichnung geöffnet,
- Fig. 2: den Filterapparat als Zusammenbauzeichnung geschlossen,

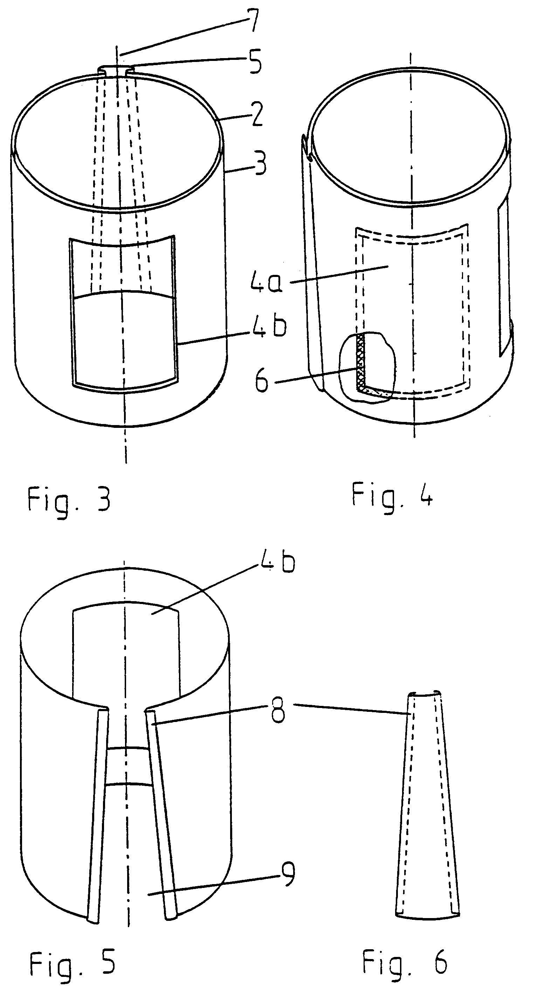

- Fig. 3: das Doppelzylindergehäuse geöffnet,
- Fig. 4: das Doppelzylindergehäuse geschlossen,
- Fig. 5: den äußeren Zylinder unverspannt,
- Fig. 6: die Spannleiste.

Der Filterapparat besteht aus zwei rohrförmigen Zylindern, einem äußeren 3 und inneren Zylinder 2, die einen Filtereinsatz 1 umschließen, wobei der äußere 3 der beiden Zylinder um den inneren Zylinder 2 um eine gemeinsame Drehachse 7 verdrehbar ist. Beide Zylinder 2, 3 sind mit mindestens je einer etwa gleichgroßen und gleichgestalteten eckigen Öffnung 4a, 4b versehen, die zum Zwecke von Wartungs- und Reparaturaufgaben durch Verdrehen deckungsgleich übereinandergebracht werden können. Die Öffnungen 4a, 4b des äußeren 3 und des inneren Zylinders 2 haben bei Anordnung je einer Öffnung eine Breite von 1/7 bis 1/4, vorzugsweise 1/6 des jeweiligen Zylinderumfanges und eine Höhe von 5/8 bis 7/8, vorzugsweise 3/4 der jeweiligen Zylinderhöhe, wobei die Steghöhen am oberen und am unteren Rand etwa gleich sind. Der äußere Zylinder 3 hat bei Anordnung einer Öffnung eine um ca. 180° gegenüber der Öffnung 4b angeordnete lösbare, parallel zur Drehachse 7 senkrecht zu den Zylinderstirnseiten von der oberen zur unteren Stirnkante sich erstreckenden, in Mantellinienrichtung verlaufende Spannleiste 5. Durch Verspannung des äußeren Zylinders 3 um den inneren Zylinder 2 wird in Verbindung mit einer streifenförmigen Dichtung 6, die sich um die Öffnung 4a des Innenzylinders 2 an dessen Außenseite befindet, wenn der Außenzylinder 3 so verdreht ist, daß dessen Mantel die Öffnung 4a des Innenzylinders 2 völlig überdeckt, ein bis zu Drücken von etwa 1 MPa druckdichtes Gehäuse des Filterapparates gewährleistet.

Der innere Zylinder 2 kann an den Stirnseiten eine über den Außendurchmesser reichende falzartige Kante 12 haben, damit der äußere Zylinder 3 gegen axiale Verschiebung gesichert ist.

Der äußere Zylinder 3 ist bei Anordnung einer Öffnung ca. 180° gegenüber der Öffnung 4b in Zylindermantelrichtung konisch geschlitzt, und beide Schlitzseitenkanten sind als Falz 8 nach innen umgebogen. Als Gegenstück zum Schlitz 9 ist die eigentliche Spannleiste 5 vorgesehen, deren Seiten eine gleiche Konizität wie der Schlitz 9 haben. Diese Spannleiste 5 wird falzeingreifend so über den Schlitz 9 des äußeren Zylinders 3 aufgesteckt, daß, wenn die Stirnseiten der Spannleiste 5 mit den Stirnseiten des äußeren Zylinders 3 gleichmäßig abschließen, eine tangentiale Spannwirkung des äußeren Zylinders 3 um den inneren Zylinder 2 entsteht, die im Zusammenwirken mit der vorzugsweise um die Öffnung 4a angebrachten Dichtleiste 6 eine Druckdichtheit des Filterapparates bis zu einem Druck von etwa 1 MPa gewährleistet. Jede beliebige für diesen Einsatzzweck übliche Spannvorrichtung ist ebenso möglich wie z.B. die Verwendung mehrerer Spannbügel, um den Zylinder herumgelegte Spannbänder usw.

Ein weiteres derartiges Ausführungsbeispiel hat eine anstelle der beschriebenen Spannvorrichtung am Schlitz 9 des äußeren Zylinders 3 beidseitig vorgesehene mit Löchern 10 zum Verschrauben vorgesehene Falzleiste 11, die als Spannvorrichtung wirkt und einerseits nach Lösen der Verschraubungen ein Verdrehen des äußeren Zylinders 3 und andererseits nach Festziehen der Verschraubungen ein Verspannen und Abdichten des Filtergehäuses ermöglicht.

Vorstehend sind Ausführungsformen erläutert, bei denen die Öffnung dem Schlitz gegenüber liegt. Als vorteilhaft erweist sich aber auch eine Anordnung, bei der der äußere Zylinder etwa in der Mitte der Öffnung längs einer Mantellinie geschlitzt ist. Die Spannvorrichtung, welche die Ränder tangential zusammenspannt, ist dann oberhalb und unterhalb der Öffnung in den geschlitzten Stegen angeordnet.

## Patentansprüche

1. Filterapparat mit in einem druckfesten und -dichten zylindrischen Gehäuse angeordneten Filtereinsatz, dadurch **gekennzeichnet,**
daß das Gehäuse für den Filtereinsatz (1) aus zwei rohrförmigen Zylindern (2, 3) mit jeweils mindestens einer etwa gleichgroßen Öffnung (4a, 4b) besteht wobei beide Zylinder sich derart berühren, daß der äußere der beiden Zylinder (3) mit seiner inneren Oberfläche an der äußeren Oberfläche des inneren Zylinders (2) anliegt, und der innere Zylinder (2) den Filtereinsatz (1) umschließt, und daß der äußere der beiden Zylinder (3) derart um den inneren Zylinder (2) um eine gemeinsame Drehachse (7) verdrehbar ist, daß die Öffnung (4a) des inneren Zylinders (2) mit der Öffnung (4b) des äußeren Zylinders (3) in Deckung gebracht werden kann.

2. Filterapparat nach Anspruch 1, dadurch gekennzeichnet, daß der äußere Zylinder (3) aus dünnem, biegsamem Bandmaterial gefertigt ist.

3. Filterapparat nach Anspruch 1 oder 2, dadurch gekennzeichnet, daß das Material des äußeren Zylinders (3) Metall ist.

4. Filterapparat nach einem der Ansprüche 1 bis 3, dadurch gekennzeichnet, daß die Öffnungen (4a, 4b) sowohl im inneren (2) als auch im äußeren Zylinder (3) im wesentlichen die gleiche Größe und Form haben.

5. Filterapparat nach einem der Ansprüche 1 bis 4, dadurch gekennzeichnet, daß bei Anordnung je einer Öffnung die Öffnungen (4a, 4b) des äußeren (3) und des inneren Zylinders (2) in der Breite 1/7 bis 1/4, vorzugsweise 1/6 des jeweiligen Zylinderumfanges und in der Höhe bei im wesentlichen gleicher Stegbreite am oberen und am unteren Rand 5/8 bis 7/8, vorzugsweise 3/4 der jeweiligen Zylinderhöhe beträgt.

6. Filterapparat nach einem der Ansprüche 1 bis 5, dadurch gekennzeichnet, daß die Öffnungen (4a, 4b) des äußeren (3) und des inneren Zylinders (2) eine runde Form haben.

7. Filterapparat nach einem der Ansprüche 1 bis 6, dadurch gekennzeichnet, daß die Öffnungen (4a, 4b) des äußeren (3) und des inneren Zylinders (2) eine eckige Form, vorzugsweise eine rechteckige Form haben.

8. Filterapparat nach Anspruch 7, dadurch gekennzeichnet, daß die Öffnungen (4a, 4b) des äußeren (3) und des inneren Zylinders (2) in ihren Ecken abgerundet sind.

9. Filterapparat nach einem der Ansprüche 1 bis 8, dadurch gekennzeichnet, daß an der Außenseite des Innenzylinders (2) des Gehäuses um die gesamte Öffnung (4a) auf der Zylindermantelfläche eine streifenförmige Dichtung (6) angebracht ist.

10. Filterapparat nach einem der Ansprüche 1 bis 8, dadurch gekennzeichnet, daß an der Innenseite des Außenzylinders (3) und die gesamte Öffnung (4b) auf der Zylindermantelfläche eine streifenförmige Dichtung (6) angebracht ist.

11. Filterapparat nach einem der Ansprüche 1 bis 10, dadurch gekennzeichnet, daß der äußere Zylinder (3) bei Anordnung einer Öffnung etwa gegenüber der Öffnung (4b) längs einer Mantellinie geschlitzt ist und daß die so entstehenden Ränder tangential mittels einer Spannvorrichtung zusammenspannbar sind.

12. Filterapparat nach Anspruch 11, dadurch gekennzeichnet, daß die Schlitzbreite von einer zur anderen Zylinderstirnseite zunimmt und beide Ränder entlang der gesamten Länge des Schlitzes als Falz (8) nach außen umgebogen sind und daß eine als Gegenstück zu den Falzen (8) ausgebildete Spannleiste (5) gleicher Konizität wie der Schlitz vorhanden ist, deren Höhe der des äußeren Zylinders (3) entspricht und die an ihren Rändern nach innen umgebogene Falze (8) hat.

13. Filterapparat nach einem der Ansprüche 1 bis 10, dadurch gekennzeichnet, daß der äußere Zylinder (3) bei Anordnung einer Öffnung etwa in der Mitte der Öffnung (4b) längs einer Mantellinnie geschlitzt ist und daß die so entstehenden Ränder tangential mittels einer Spannvorrichtung zusammenspannbar sind.

## Claims

1. Filtering apparatus comprising a filter cartridge arranged in a pressure-resistant and pressure-tight cylindrical housing, characterised in that the housing for the filter cartridge (1) consists of two tubular cylinders (2, 3) each with at least one opening (4a, 4b) of approximately the same size, the two cylinders touching one another in such a manner that the outer of the two cylinders (3) bears via its inner surface against the outer surface of the inner cylinder (2) and the inner cylinder (2) surrounds the filter cartridge (1), and that the outer of the two cylinders (3) can be rotated about the inner cylinder (2) about a common axis of rotation (7) in such a manner that the opening (4a) in the inner cylinder (2) can be made to coincide with the opening (4b) in the outer cylinder (3).

2. Filtering apparatus according to claim 1, characterised in that the outer cylinder (3) is made of thin, flexible strip material.

3. Filtering apparatus according to claim 1 or claim 2, characterised in that the material of the outer cylinder (3) is metal.

4. Filtering apparatus according to one of claims 1 to 3, characterised in that the openings (4a, 4b) in both the inner (2) and the outer cylinders (3) have substantially the same size and shape.

5. Filtering apparatus according to one of claims 1 to 4, characterised in that, when one opening is provided in each case, the openings (4a, 4b) in the outer (3) and the inner cylinders (2) have a width equal to 1/7 to 1/4, preferably 1/6 of the respective cylinder circumference and a height equal to 5/8 to 7/8, preferably 3/4 of the respective cylinder height with substantially the same web width at the upper and lower edges.

6. Filtering apparatus according to one of claims 1 to 5, characterised in that the openings (4a, 4b) in the outer (3) and the inner cylinders (2) are round.

7. Filtering apparatus according to one of claims 1 to 6, characterised in that the openings (4a, 4b) in the outer (3) and the inner cylinders (2) are angular, preferably rectangular.

8. Filtering apparatus according to claim 7, characterised in that the openings (4a, 4b) in the outer (3) and the inner cylinders (2) have rounded corners.

9. Filtering apparatus according to one of claims 1 to 8, characterised in that a strip-shaped seal (6) is applied to the outer face of the inner cylinder (2) of the housing around the entire opening (4a) on the outer cylinder surface.

10. Filtering apparatus according to one of claims 1 to 8, characterised in that a strip-shaped seal (6) is applied to the inner face of the outer cylinder (3) around the entire opening (4b) on the outer cylinder surface.

11. Filtering apparatus according to one of claims 1 to 10, characterized in that, when one opening is provided, the outer cylinder (3) is slotted approximately opposite the opening (4b) along a generating line and that the resulting edges can be clamped together tangentially by means of a clamping device.

12. Filtering apparatus according to claim 11, characterised in that the width of the slot increases from one end face of the cylinder to the other and both edges are bent outwards to form folds (8) along the entire length of the slot and that a clamping strip (5) forming a mating component to the folds (8) and having the same conicity as the slot is provided, the height of which corresponds to that of the outer cylinder (3) and which has inwardly bent folds (8) at its edges.

13. Filtering apparatus according to one of claims 1 to 10, characterised in that, when one opening is provided, the outer cylinder (3) is slotted approximately in the centre of the opening (4b) along a generating line and that the resulting edges can be clamped together tangentially by means of a clamping device.

## Revendications

1. Filtre comportant une cartouche filtrante disposée dans un boîtier cylindrique résistant et étanche à la pression, caractérisé en ce que,
le boîtier pour la cartouche filtrante (1) est constitué de deux cylindres tubulaires (2, 3) comportant chacun au moins une ouverture (4a, 4b) ayant approximativement la même dimension, les deux cylindres se touchant de telle sorte que le cylindre extérieur (3) des deux cylindres s'applique par sa surface intérieure contre la surface extérieure du cylindre intérieur (2), en ce que le cylindre intérieur (2) enserre la cartouche filtrante (1), et en ce que le cylindre extérieur (3) des deux cylindres peut pivoter autour du cylindre intérieur (2) autour d'un axe de rotation commun (7) de telle sorte que l'ouverture (4a) du cylindre intérieur (2) coïncide avec l'ouverture (4b) du cylindre extérieur (3).

2. Filtre selon la revendication 1, caractérisé en ce que le cylindre extérieur (3) est réalisé en matériau de feuillard mince et souple.

3. Filtre selon la revendication 1 ou 2, caractérisé en ce que le matériau du cylindre extérieur (3) est du métal.

4. Filtre selon l'une des revendications 1 à 3, caractérisé en ce que les ouvertures (4a, 4b) ont sensiblement les mêmes dimensions et formes, aussi bien dans le cylindre intérieur (2) que dans le cylindre extérieur (3).

5. Filtre selon l'une des revendications 1 à 4, caractérisé en ce que, dès lors qu'une ouverture est prévue dans chacun des cylindres, les ouvertures (4a, 4b) du cylindre extérieur (3) et du cylindre intérieur (2) ont une largeur de 1/7 à 1/4, de préférence de 1/6, du périmètre respectif du cylindre, et une hauteur de 5/8 à 7/8, ce préférence de 3/4, de la hauteur respective du cylindre, la largeur de la partie pleine au niveau des bords supérieur et inférieur étant sensiblement la même.

6. Filtre selon l'une des revendications 1 à 5, caractérisé en ce que les ouvertures (4a, 4b) des cylindres extérieur (3) et intérieur (2) ont une forme ronde.

7. Filtre selon l'une des revendications 1 à 6, caractérisé en ce que les ouvertures (4a, 4b) des cylindres extérieur (3) et intérieur (2) ont une forme angulaire, de préférence une forme rectangulaire.

8. Filtre selon la revendication 7, caractérisé en ce que les coins des ouvertures (4a, 4b) des cylindres extérieur (3) et intérieur (2) sont arrondis.

9. Filtre selon l'une des revendications 1 à 8, caractérisé en ce que, au niveau de la face extérieure du cylindre intérieur (2) du boîtier, un joint (6) en forme de bande est prévu sur la surface latérale du cylindre autour de l'ensemble de l'ouverture (4a).

10. Filtre selon l'une des revendications 1 à 8, caractérisé en ce que, au niveau de la face intérieure du cylindre extérieur (3), un joint (6) en forme de bande est prévu sur la surface latérale du cylindre autour de l'ensemble de l'ouverture (4b).

11. Filtre selon l'une des revendications 1 à 10, caractérisé en ce que, dès lors qu'il comporte une ouverture, le cylindre extérieur (3) est fendu le long d'une génératrice approximativement à l'opposé de l'ouverture (4b), et en ce que les bords ainsi obtenus peuvent être serrés tangentiellement ensemble au moyen d'un dispositif de serrage.

12. Filtre selon la revendication 11, caractérisé en ce que la largeur de la fente augmente d'une face frontale de cylindre vers l'autre, en ce que les deux bords sont repliés vers l'extérieur en tant que pli (8) sur toute la longueur de la fente, et en ce qu'il est prévu une barrette de serrage (5) de même conicité que la fente en tant qu'élément antagoniste des plis (8), dont la hauteur correspond à celle du cylindre extérieur (3) et qui au niveau de ses bords comporte des plis (8) repliés vers l'intérieur.

13. Filtre selon l'une des revendications 1 à 10, caractérisé en ce que, dès lors qu'il comporte une ouverture, le cylindre extérieur (3) est fendu le long d'une génératrice approximativement au milieu de l'ouverture (4b), et en ce que les bords ainsi obtenus peuvent être serrés tangentiellement ensemble au moyen d'un dispositif de serrage.
